(19) **Europäisches Patentamt**
**European Patent Office**
**Office européen des brevets**

(11) **EP 2 070 424 B1**

(12) **EUROPEAN PATENT SPECIFICATION**

(45) Date of publication and mention
of the grant of the patent:
**03.08.2011 Bulletin 2011/31**

(51) Int Cl.:
**A23G 9/34** (2006.01)

(21) Application number: **08168267.6**

(22) Date of filing: **04.11.2008**

(54) **Frozen confections**

Gefrorene Süßwaren

Confections surgelées

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **04.12.2007 EP 07122238
04.12.2007 EP 07122239**

(43) Date of publication of application:
**17.06.2009 Bulletin 2009/25**

(73) Proprietors:
• **Unilever PLC
London
EC4Y 0DY (GB)**
Designated Contracting States:
**CY GB IE MT**
• **Unilever N.V.
3013 AL Rotterdam (NL)**
Designated Contracting States:
**AT BE BG CH CZ DE DK EE ES FI FR GR HR HU
IS IT LI LT LU LV MC NL NO PL PT RO SE SI SK TR**

(72) Inventor: **Wix, Loyd,
c/o Unilever R&D Colworth
Bedford, Bedfordshire MK44 1LQ (GB)**

(74) Representative: **Clarke, Christopher John
Unilever Patent Group
Colworth House
Sharnbrook
Bedford MK44 1LQ (GB)**

(56) References cited:
**EP-A- 1 400 176          CA-C- 2 204 467
US-A- 4 826 656          US-A1- 2003 031 758
US-A1- 2007 134 404**

• **SOUCI, FACHMANN, KRAUT: "Food composition
and nutrition tables" 2000, MEDPHARM ,
GERMANY , XP002467723 ISBN: 3-88763-076-9 *
page 1084 ***
• **SOUCI, FACHMANN, KRAUT: "Food composition
and nutrition tables" 2000, MEDPHARM ,
GERMANY , XP002467724 ISBN: 3-88763-076-9 *
pages 53-54 ***

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Technical Field of the invention**

The present invention relates to frozen confections which are acidic, such as water ices, fruit ices, sorbets and the like.

**Background**

Water ices, fruit ices, sorbets and similar products normally have a pH of about 4 or below. Such products are typically fruit-flavoured or cola-flavoured and therefore contain acids such as citric acid, malic acid, tartaric acid or phosphoric acid. However, acids are known to be damaging to teeth since they cause de-mineralization of tooth enamel. Water ice and fruit ice products are often designed for children, whereas parents are concerned about damage to their children's teeth and are therefore reluctant to let their children consume such products. CA 2 204 467 discloses freeze-it-yourself pops having a liquid consistency at room temperature and a slushy or ray consisting when trozen. These pops have a stable opacity but an acidic pH. Simply raising the pH of a product is not satisfactory since although this reduces demineralization, it creates another problem, namely that the frozen confection loses its characteristic acidic taste and palatability. Thus, there remains a need for improved "tooth-friendly" acidic frozen confections.

**Brief description of the invention**

We have now found that acidic frozen confections which do not cause substantial demineralization of tooth enamel, but which retain their acidic taste can be prepared provided that a buffer is used. Accordingly, in a first aspect, the present invention provides a frozen confection having a pH of from 4.7 to 5.5 and comprising (by weight of the confection):

- 10 to 35% sweeteners;
- 0.75 to 3% of a buffer;
- at most 2% protein; and
- at most 2% fat.

The pH must be at least 4.7 so that demineralization of the tooth enamel is minimized. It must be no higher than 5.5 because in order to obtain a pH greater than 5.5 a large amount of buffer salt is required. Large amounts of buffer salt increase the solubility of calcium in the tooth enamel, so that demineralisation occurs and the benefit obtained by raising the pH is reduced. Furthermore, the high concentration of cations from the buffer can result in a mineral off-flavour. The buffer not only keeps the pH at the desired value, but also acts as source of $H^+$ ions which provide the desired organoleptic perception of acidity.

Preferably the buffer comprises a weak acid selected from citric acid, malic acid, lactic acid, fumaric acid, ascorbic acid, tartaric acid, phosphoric acid, succinic acid or mixtures thereof. More preferably the buffer also comprises the sodium or potassium salt of the weak acid. Most preferably the buffer comprises citric acid and sodium citrate.

Preferably the pH is from 4.8 to 5.4, more preferably from 4.9 to 5.3.

Preferably the buffer is present in an amount of from 1 - 2.5 wt%, more preferably from 1-2 wt%.

Preferably the frozen confection comprises 15 to 25 wt% sweeteners.

Preferably the frozen confection contains less than 0.1 wt% artificial sweeteners.

Preferably the frozen confections contains from 2 to 12 wt% fructo oligo saccharides.

Preferably the frozen confection comprises less than 1 wt% protein, more preferably less than 0.5 wt%, most preferably no protein.

Preferably the frozen confection comprises less than 1 wt% fat, more preferably less than 0.5%, most preferably no fat.

Preferably the frozen confection is a water ice, a fruit ice or a sorbet.

In a related aspect, the present invention provides a process for manufacturing a frozen confection according to the first aspect of the invention, the process comprising the steps of:

(a) preparing a mix having a pH of from 4.7 to 5.5 and comprising 10 to 35 wt% sweeteners; 0.75 to 3 wt% of a buffer; at most 2 wt% protein; and at most 2 wt% fat;
(b) pasteurising and optionally homogenising the mix; then
(c) freezing and optionally aerating the mix to produce the frozen confection.

**Detailed Description**

Unless defined otherwise, all technical and scientific terms used herein have the same meaning as commonly understood by one of ordinary skill in the art. Definitions and descriptions of various terms and techniques used in frozen confectionery manufacture are found in Ice Cream, 6th Edition, R. T. Marshall, H. D. Goff and R. W. Hartel (2003), Kluwer Academic/Plenum Publishers. All percentages, unless otherwise stated, refer to the percentage by weight, with the exception of percentages cited in relation to the overrun.

**Buffer**

Buffers resist change in pH upon addition of small amounts of acid or base, or upon dilution. The buffer systems of the present invention are capable of maintaining the pH in the range of 4.7 to 5.5. The pH of the frozen confection means the pH when in liquid form, e.g. as an unfrozen mix or after melting. Buffers consist of a weak acid and a base. The buffering action is the result of the equilibrium between the weak acid (HA) and the conjugate base (A⁻)

$$HA(aq) + H_2O(l) \leftrightarrow H_3O^+(aq) + A^-(aq)$$

The buffer not only sets the pH in the desired range, but also provides a source of stored hydrogen ions which provide the acidic taste. The total amount of buffer is defined as the amount of acid plus conjugate base.

Preferably the pH is less than 5.4, more preferably less than 5.3. Preferably the pH is greater than 4.8, more preferably greater than 4.9. The higher the pH, the lower is the rate of tooth demineralization. However, if the pH is too high, the organoleptic perception of acidity is reduced. Moreover, high pHs require greater amounts of base, which can result in salty / mineral off-flavours due to the high concentration of the cation from the base. Furthermore, large amounts of base increase the solubility of calcium in the tooth enamel, so that demineralisation occurs and the benefit obtained by raising the pH is reduced.

The acid in the buffer can be provided in the form of a pure acid (e.g. citric acid monohydrate) or may be present in other ingredients (e.g. citric acid or malic acid in fruit juice). The acid naturally present in such ingredients must be taken into account when determining the amount of conjugate base required to produce a buffer having the desired pH and when determining the total amount of buffer.

The acid most commonly found in water ices, fruit ices and sorbets is citric acid, since citrus fruits (e.g. lemon, orange, lime and grapefruit) are popular flavours for these products. However, other acids may be used, for example malic acid (e.g. in apple products), tartaric acid (e.g. in grape products), phosphoric acid (e.g. in cola products) or lactic acid (e.g. in yoghurt). Other acids, such as fumaric acid, ascorbic acid or succinic acid may be used. Preferably the base is the sodium or potassium salt of the acid. Sodium and potassium salts are generally soluble, food grade and readily available. In a particularly preferred embodiment, the buffer comprises citric acid and sodium citrate.

Mixtures of different acids may be present. Where the mixture consists predominantly of one acid, a conjugate base of that acid is preferably used to make the buffer. So for example if the acid is predominantly citric acid, then it is preferable to use e.g. sodium or potassium citrate. If the acid is a roughly equal mix of two or more acids, then it is preferable that the conjugate base of the strongest acid is used. For example if the acid is a 50 / 50 mix of citric and malic acid, then a citrate is preferably used as the base. In this situation effectively only half of the acid (citric, $pK_{a1}$ = 3.1) is involved in the buffer whilst other half (malic, $pK_{a1}$ = 3.4) remains as free acid.

To determine the amount of base required for a given acid or mixture of acids in the product and desired pH, a pH curve can be obtained by a specific titration for the product, from which the amount of base can be determined using the method described in example 1 below. Alternatively, an initial estimate can be made on the basis of the pH curve for citrate / citric acid (see example 1). The pH can then be measured and adjusted accordingly by adding more acid or base, until the required value is achieved.

The organoleptic perception of acidity can be regulate by increasing or decreasing the concentration of the buffer system (taking into account acid present from fruit juices etc.). The buffer is present in an amount of at least 0.75wt %, preferably at least 1wt%, since the greater the amount of buffer, the stronger the perception of acidity. Preferably the buffer is present in an amount of at most 2.5 wt %, more preferably at most 2 wt%, since if the concentration of the cation from the base is very high, the product can have salty / mineral off-flavours.

Frozen Confections

The frozen confection of the invention is preferably a water ice, a fruit ice or a sorbet. Water ice typically contains 15-25 wt% sugars / sweeteners / sugar replacers, together with stabilisers, colours and flavourings. Fruit ices are water ices which contain at least 10% fruit. Fruit means edible part of fruit or the equivalent as juice, extracts, concentrated or dehydrated products and so on. Fruit, pulp, juice or any other preparation may be used either fresh or preserved. Sorbets are aerated products. In addition to the ingredients present in water ices and fruit ices, they typically contain a whipping or aerating agent. Proteins (e.g. milk protein) are generally not present in water ices, fruit ices and sorbets, except in small amounts as stabilisers (e.g. gelatine) or aerating agents (e.g. hydrolysed whey protein). Fats are generally not present in water ices, fruit ices and sorbets.

The frozen confection comprises sweeteners which include sugars (such as fructose, sucrose, dextrose and corn syrups), sugar alcohols (such as maltitol, xylitol, glycerol and sorbitol), sugar replacers (such as inulin, oligofructose and polydextrose) and intense artificial sweeteners (such as aspartame, saccharin, acesulfame K, alitame, thaumatin, cyclamate, glycyrrhizin, stevioside, neohesperidine, sucralose, monellin and neotame).

In one embodiment the frozen confection is substantially free from artificial sweeteners i.e. it contains less than 0.1 wt%, more preferably less than 0.01 wt% artificial sweeteners, most preferably it contains no artificial sweeteners. It is known that simple sugars (in particular sucrose) and starch derivatives such as corn syrups can cause tooth enamel demineralisation when converted into lactic acid by intraoral bacteria. Thus hitherto, tooth-friendly ice creams have been formulated with artificial sweeteners in order to replace some or all of the sucrose. However, for the acidic frozen confections of the present invention, we have found that it is more important to control the acidity of the formulation than to remove the simple sugars and / or corn syrups. Thus a substantial reduction in enamel demineralization results even when artificial sweeteners are not used to replace simple sugars and / or corn syrups. By avoiding the use of artificial sweeteners it is possible to formulate acidic frozen confections that cause reduced demineralisation but which do not contain ingredients which are perceived by consumers as artificial or unnatural.

In another embodiment the frozen confection contains fructo-oligosaccharides. Fructo-oligosaccharides are composed of linear chains of fructose units linked by ß(2-1) bonds and often terminated by a glucose unit. Fructo-oligosaccharides are not metabolically available to oral bacteria and thus have a very low potential for the formation of acid. As a result such materials are useful ingredients to replace sugar in tooth-friendly frozen confections. They also have the advantage that they are perceived as natural, healthy ingredients. Fructo-oligosaccharides are especially suitable sweeteners for the frozen confections of the invention since the buffer prevents the hydrolysis of fructo-oligosaccharides to fructose which would otherwise occur when subjected to the combination of high temperature and low pH, for example during pasteurization.

Fructo-oligosaccharides include inulin, oligofructose (also sometimes called oligofructan) and kestose. Inulin occurs in many crops, and on an industrial scale it is usually extracted from chicory roots. The degree of polymerization (DP) of inulin usually ranges from 10 to about 60. Preferably the DP is below 40, more preferably below 20. Inulin is available from the ORAFTI company under the trade name Raftiline™. Oligofructose has between 2 and 7 fructose units and is obtained from inulin by partial enzymatic hydrolysis. Oligofructose is available from ORAFTI under the trade name Raftlilose™. Another form of oligofructose is kestose (available from Beghin-Meiji). Kestose consists of 3 fructose units, and therefore is particularly effective at providing freezing point depression. Preferably the frozen confection contains at least 2 wt%, more preferably at least 3wt%, even more preferably at least 4 wt%, most preferably at least 5 wt% fructo-oligosaccharides. Preferably the frozen confection contains at most 12 wt%, more preferably at most 10 wt%, even more preferably at most 9 wt%, most preferably at most 8 wt% fructo-oligosaccharides. Preferably the fructo-oligosaccharide is selected from the group consisting of oligofructose, inulin, kestose and mixtures thereof.

The frozen confection may be aerated or unaerated. By unaerated is meant an overrun of less then 20%, preferably less than 10%. An unaerated frozen confection is not subjected to deliberate steps such as whipping to increase the gas content. Nonetheless, it will be appreciated that during the preparation of unaerated frozen confections, low levels of gas, such as air, may be incorporated in the product. Aerated frozen confections have an overrun of more than 20%, preferably more than 50%, more preferably more than 75%. Preferably the frozen confection has an overrun of less than 200%, more preferably less than 150%, most preferably less than 120%. Overrun is defined by the equation below and is measured at atmospheric pressure.

$$\text{overrun \%} = \frac{\text{density of mix - density of frozen confection}}{\text{density of frozen confection}} \times 100$$

The frozen confections may be manufactured by any suitable process, for example a process comprising the steps of:

(a) preparing a mix of ingredients; then
(b) pasteurising and optionally homogenising the mix; then
(c) freezing and optionally aerating the mix to produce the frozen confection.

The present invention will now be further described with reference to the following examples, which are illustrative only and non-limiting, and to the figure wherein:

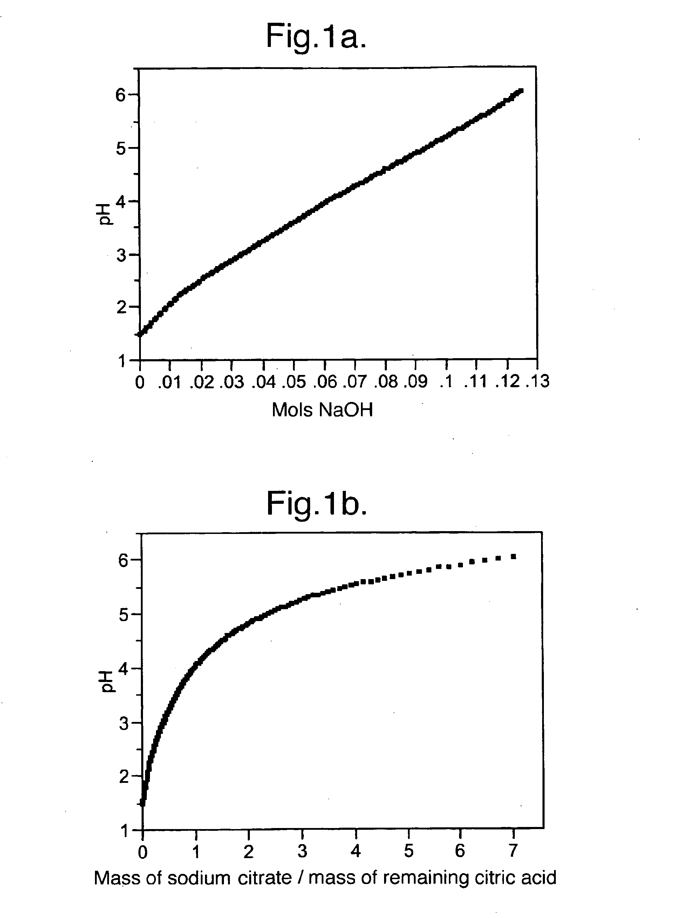

Figure 1 shows the pH curves for citric acid titrated with sodium hydroxide expressed in terms of (a) sodium hydroxide concentration and (b) ratio of sodium citrate to remaining citric acid.

**Examples**

Examples 1: Buffer preparation

Example 1 demonstrates how to prepare a buffer with a desired pH. First, a 0.5 molar solution of citric acid was titrated using 1 molar sodium hydroxide solution at 18°C. The resulting titration curve is shown in Figure 1(a). As sodium hydroxide is added, some of the citric acid is neutralized to sodium citrate and the pH of the solution rises. The pH at any point along the titration curve is determined by the ratio of citric acid to citrate. At the concentrations typically used in food products e.g. less than about 10 wt%, the pH essentially depends only on the ratio and is approximately independent of the concentration (pH is affected by ionic strength at higher buffer concentrations).
The amounts of citric acid and sodium citrate at any point on the curve can be calculated from the sodium hydroxide concentration and the initial citric acid concentration. The pH curve may then be expressed as a ratio of the concentrations of sodium citrate to citric acid, shown in Figure 1(b). From this curve, the ratio of sodium citrate : citric acid required for a buffer of the desired pH can be obtained. Some examples are shown in Table 1. The first column is the desired buffer pH. The second column shows the ratio of sodium citrate to citric acid read off from Figure 1(b). The next three columns show the composition of the solution that was made and the final column gives the resulting actual solution pH. In each case, the actual pH is close to the desired pH.

Table 1

| Required pH | Na citrate : Citric acid | Na citrate (g) | Citric acid (g) | Water (ml) | Measured pH |
|---|---|---|---|---|---|
| 4.0 | 1.022:1 | 10.22 | 10 | 250ml | 4.08 |
| 4.5 | 1.542:1 | 15.42 | 10 | 250ml | 4.47 |
| 5.0 | 2.426:1 | 24.26 | 10 | 500ml | 4.90 |
| 5.5 | 4.070:1 | 40.70 | 10 | 500ml | 5.38 |

Example 2 - Water ices

Example 2 demonstrates water ices according to the invention, prepared to the base formulation shown in Table 2. Two sodium citrate concentrations were used: 1.171 and 1.964 wt%, resulting in mixes with expected pHs of 5.0 and 5.5 respectively. Three comparative examples were also produced. Comparative example X was a standard water ice made using the same formulation as example 2, but without using a buffer salt (i.e. no sodium citrate). Comparative example Y was a water ice containing less sugar and acid, which was expected to cause less demineralization than the standard water ice. Comparative example Z was a water ice formulation with a pH of 5.1. However, this was achieved not by using a buffer, but instead by omitting the citric acid monohydrate and neutralizing the citric acid present in the lemon juice using 1 molar sodium hydroxide to reach pH 5.1.

Table 2

| Ingredient (wt%) | Example 2 A / B | Comparative Example X | Comparative example Y | Comparative example Z |
|---|---|---|---|---|
| Sucrose | 16.7 | 16.7 | 0 | 5.0 |
| Fructose | 0 | 0 | 8.5 | 5.0 |
| Dextrose monohydrate | 5.4 | 5.4 | 0 | 4.9 |
| 28 DE Corn syrup solids | 0 | 0 | 13.0 | 0 |
| Oligofructose | 0 | 0 | 0 | 7.0 |

(continued)

| Ingredient (wt%) | Example 2 A / B | Comparative Example X | Comparative example Y | Comparative example Z |
|---|---|---|---|---|
| Sodium Citrate | 1.171 /1.964 | 0 | 0 | 0 |
| Citric acid monohydrate | 0.4 | 0.4 | 0.25 | 0 |
| Lemon juice concentrate | 0.7 | 0.7 | 0 | 0.7 |
| Flavours | 0.3 | 0.3 | 0.1 | 0.3 |
| Colours | 0.01 | 0.01 | 0.13 | 0.03 |
| Locust bean gum | 0.2 | 0.2 | 0.2 | 0.2 |
| Sodium hydroxide (1 M) | 0 | 0 | 0 | To pH 5.1 |
| Water | To 100 | To 100 | To 100 | To 100 |

Oligofructose was Raftilose™ P95 was supplied by ORAFTI (Tienen, Belgium) and had a moisture content of 3 wt%. On a dry basis the Raftilose™ consisted of 95 wt% oligofructose and 5 wt% sugars (consisting of 3% sucrose, 1% fructose and 1% glucose). Lemon juice concentrate (40°Brix) contained 27.5% citric acid.

Water ice products in the form of ice lollies (approximately 100mls in volume) on sticks were prepared as follows. First the dry ingredients were mixed with hot water and stirred until they had completely dissolved. The mixes were then pasteurized at 83°C for 20 seconds, cooled to room temperature (18°C) and the pH of each mix was measured. The mixes were poured into moulds immersed in a brine bath at -40°C and sticks were inserted when the mix was partially frozen. After the products had frozen, they were removed from the moulds and stored at -18°C.

Enamel blocks were cut from bovine incisors. They were hand-polished using 9 micron alumina so that the surfaces and edges were uniform. The Knoop hardness (HK) of each block was measured using a Mitutoyo MVK-H1 Vickers micro-hardness tester. 16 indents were made per block and the mean value was calculated. The blocks were then placed on mounting poles using ribbon wax; nail varnish was then painted around the edges of the blocks to limit the exposed surface area to the enamel face only. Samples (2 ml) of the water ices of Examples 2A and 2B and comparative examples X and Y were cut, placed in 7ml containers and warmed up to 37°C. The enamel blocks were immersed in the melted water ices for 30 minutes. After the treatment the blocks were rinsed with copious amounts of deionised water, and the hardness was measured again. The results are given in Table 3.

Table 3

| | Initial Hardness (HK) | Final Hardness (HK) | Decrease (%) |
|---|---|---|---|
| Example 2A (pH 5) | 203 ± 4 | 187 ± 3 | 8 |
| Example 2B (pH 5.5) | 200 ± 5 | 176 ± 4 | 12 |
| Comparative Example X | 198 ± 10 | 132 ± 14 | 33 |
| Comparative example Y | 194 ± 8 | 145 ± 11 | 25 |

Table 3 shows that there was a large decrease in hardness of the enamel after exposure to the water ices of comparative examples X and Y (33% and 25% respectively) whereas examples 2A and 2B according to the invention resulted in much smaller decreases (9% and 12%). Although Example 2B was at a higher pH than Example 2A, the decrease in hardness was greater. This is believed to be because the higher pH necessitated a greater amount of sodium citrate to form the buffer. The higher concentration of citrate ions results in a greater solubility of calcium in the enamel.

The water ices were also tasted. Examples 2A and 2B and comparative examples X and Y tasted fruity and acidic, but comparative example Z had a bland taste, lacking in fruit flavour. Example 2A (pH 5.0) was judged to have the most authentic fruit flavour. Example 2B (pH 5.5) had an acceptable fruit flavour; it also had a small but noticeable salt / mineral flavour, arising from the relatively high concentration of buffer. This demonstrates that by using a buffer system according to the invention, it is possible to produce acidic-tasting frozen confections whilst avoiding low pH, and hence minimizing tooth enamel demineralization. In contrast, simply raising the pH without using a buffer did not achieve the desired taste.

Example 3 - Fruit ices

Examples 3A, 3B and 3C are fruit ice formulations according to the invention, shown in Table 4. The formulations have a pH of 5.0 for a 65°Brix orange juice concentrate containing 6.1% citric acid.

Table 4

| Ingredient (wt%) | Example 3A | Example 3B | Example 3C |
|---|---|---|---|
| Oligofructose | 0 | 7 | 0 |
| Inulin | 8.5 | 0 | 0 |
| Dextrose monohydrate | 0 | 0 | 4.5 |
| Sucrose | 5 | 5 | 5 |
| Sodium Citrate | 3.7 | 3.7 | 3.7 |
| Orange juice concentrate | 25 | 25 | 25 |
| Orange Flavour | 0.3 | 0.3 | 0.3 |
| Locust bean gum | 0.25 | 0.25 | 0.12 |
| Water | To 100 | To 100 | To 100 |

Example 4 - Sorbet

Example 4 is a pineapple sorbet formulation (pH 5.0) according to the invention, shown in Table 5.

Table 5

| Ingredient (wt %) | Example 4 |
|---|---|
| Oligofructose | 7 |
| Pineapple juice | 75.97 |
| DE 63 Glucose-fructose corn syrup | 8 |
| DE 28 Corn syrup solids | 6.65 |
| Sodium citrate | 1.33 |
| Locust bean gum | 0.3 |
| Guar | 0.25 |
| Gelatin | 0.5 |

Example 5 - Fruit ices

Examples 5A, 5B and 5C demonstrate orange-flavored fruit ice formulations shown in Table 6. Three concentrations of buffer (citric acid and sodium citrate) were used: 0.5, 0.75 and 1 wt % respectively. Example 5A is a comparative example since it contains less than the minimum required amount of buffer. Examples 5B and 5C contain greater amounts of buffer and are within the scope of the invention. The pH of the examples 5A, 5B and 5C was 4.8.

Table 6

| Ingredient (wt%) | Example 5A | Example 5B | Example 5C |
|---|---|---|---|
| Sodium Benzoate | 0.02 | 0.02 | 0.02 |
| Potassium Sorbate | 0.04 | 0.04 | 0.04 |
| Salt | 0.08 | 0.08 | 0.08 |
| Butteroil | 0.13 | 0.13 | 0.13 |

(continued)

| Ingredient (wt%) | Example 5A | Example 5B | Example 5C |
|---|---|---|---|
| SMP | 0.338 | 0.338 | 0.338 |
| Xanthan | 0.35 | 0.35 | 0.35 |
| Vanillin | 0.03 | 0.03 | 0.03 |
| Orange flavour | 0.02 | 0.02 | 0.02 |
| 38DE corn syrup | 8 | 8 | 8 |
| Sucrose | 20 | 20 | 20 |
| Orange Concentrate | 1 | 1 | 1 |
| Citric acid | 0.165 | 0.248 | 0.33 |
| Sodium Citrate | 0.335 | 0.503 | 0.67 |
| Water | to 100% | to 100% | to 100% |
| **pH** | **4.8** | **4.8** | **4.8** |

The examples were tasted. Example 5A tasted bland and weak. Examples 5B and 5C tasted more acidic and more fruity. This demonstrates that insufficient amounts of buffer do not produce the desired acidic taste, whereas frozen confections containing amounts of buffer according to the invention do produce the desired acidic taste.

**Claims**

1.    A frozen confection having a pH of from 4.7 to 5.5 and comprising (by weight of the confection):

   • 10 to 35% sweeteners;
   • 0.75 to 3% of a buffer;
   • at most 2% protein; and
   • at most 2% fat.

2.    A frozen confection according to claim 1 wherein the buffer comprises a weak acid selected from citric acid, malic acid, lactic acid, fumaric acid, ascorbic acid, tartaric acid, phosphoric acid or succinic acid and mixtures thereof.

3.    A frozen confection according to claim 2 wherein the buffer comprises the sodium or potassium salt of the weak acid.

4.    A frozen confection according to claim 3 wherein the buffer comprises citric acid and sodium citrate.

5.    A frozen confection according to claims 1 to 4 wherein the pH is from 4.8 to 5.4.

6.    A frozen confection according to claims 1 to 5 wherein the buffer is present in an amount of from 1 to 2.5 wt %.

7.    A frozen confection according to claims 1 to 6 comprising 15 to 25 wt% sweeteners.

8.    A frozen confection according to claims 1 to 7 comprising less than 0.1 wt% artificial sweeteners.

9.    A frozen confection according to claims 1 to 8 comprising 2 to 12 wt% fructo oligo saccharides.

10.  A frozen confection according to claims 1 to 9 comprising less than 1 wt% protein.

11.  A frozen confection according to claims 1 to 10 comprising less than 1 wt% fat.

12.  A frozen confection according to claims 1 to 11 which is a water ice, a fruit ice, or a sorbet.

13.  A process for manufacturing a frozen confection according to any of claims 1 to 12, the process comprising the steps of:

(a) preparing a mix having a pH of from 4.7 to 5.5 and comprising 10 to 35 wt% sweeteners; 0.75-3 wt% of a buffer; at most 2 wt% protein; and at most 2 wt% fat;
(b) pasteurising and optionally homogenising the mix; then
(c) freezing and optionally aerating the mix to produce the frozen confection.

**Patentansprüche**

1. Gefrorene Süßware, die einen pH von 4,7 bis 5,5 hat und (bezogen auf das Gewicht der Süßware):

• 10 bis 35 % Süßungsmittel;
• 0,75 bis 3 % eines Puffers;
• höchstens 2 % Protein und
• höchstens 2 % Fett
umfasst.

2. Gefrorene Süßware gemäß Anspruch 1, wobei der Puffer eine schwache Säure, ausgewählt aus Citronensäure, Äpfelsäure, Milchsäure, Fumarsäure, Ascorbinsäure, Weinsäure, Phosphorsäure oder Bernsteinsäure und Gemischen davon umfasst.

3. Gefrorene Süßware gemäß Anspruch 2, wobei der Puffer das Natrium- oder Kaliumsalz der schwachen Säure umfasst.

4. Gefrorene Süßware gemäß Anspruch 3, wobei der Puffer Citronensäure und Natriumcitrat umfasst.

5. Gefrorene Süßware gemäß den Ansprüchen 1 bis 4, wobei der pH von 4,8 bis 5,4 ist.

6. Gefrorene Süßware gemäß den Ansprüchen 1 bis 5, wobei der Puffer in einer Menge von 1 bis 2,5 Gewichts-% vorliegt.

7. Gefrorene Süßware gemäß den Ansprüchen 1 bis 6, die 15 bis 25 Gewichts-% Süßungsmittel umfasst.

8. Gefrorene Süßware gemäß den Ansprüchen 1 bis 7, die weniger als 0,1 Gewichts-% künstliche Süßungsmittel umfasst.

9. Gefrorene Süßware gemäß den Ansprüchen 1 bis 8, die 2 bis 12 Gewichts-% Fructo-oligo-saccharide umfasst.

10. Gefrorene Süßware gemäß den Ansprüchen 1 bis 9, die weniger als 1 Gewichts-% Protein umfasst.

11. Gefrorene Süßware gemäß den Ansprüchen 1 bis 10, die weniger als 1 Gewichts-% Fett umfasst.

12. Gefrorene Süßware gemäß den Ansprüchen 1 bis 11, die ein Wassereis, ein Fruchteis oder ein Sorbet ist.

13. Verfahren zur Herstellung einer gefrorenen Süßware gemäß einem der Ansprüche 1 bis 12, wobei das Verfahren die Schritte:

(a) Herstellen einer Mischung, die einen pH von 4,7 bis 5,5 hat und 10 bis 35 Gewichts-% Süßungsmittel, 0,75 bis 3 Gewichts-% eines Puffers, höchstens 2 Gewichts-% Protein und höchstens 2 Gewichts-% Fett umfasst;
(b) Pasteurisieren und gegebenenfalls Homogenisieren der Mischung, danach
(c) Gefrieren und gegebenenfalls Belüften der Mischung, um die gefrorene Süßware herzustellen,
umfasst.

**Revendications**

1. Confiserie congelée ayant un pH de 4,7 à 5,5 et comprenant (en poids de la confiserie) :

10 à 35 % d'édulcorants ;
0,75 à 3 % d'un tampon,
au plus 2 % de protéine, et
au plus 2 % de matières grasses.

**2.** Confiserie congelée selon la revendication 1, dans laquelle le tampon comprend un acide faible choisi parmi l'acide citrique, l'acide malique, l'acide lactique, l'acide fumarique, l'acide ascorbique, l'acide tartrique, l'acide phosphorique ou l'acide succinique et leurs mélanges.

**3.** Confiserie congelée selon la revendication 2, dans laquelle le tampon comprend le sel de sodium ou de potassium de l'acide faible.

**4.** Confiserie congelée selon la revendication 3, dans laquelle le tampon comprend de l'acide citrique et du citrate de sodium.

**5.** Confiserie congelée selon les revendications 1 à 4, dans laquelle le pH est de 4,8 à 5,4.

**6.** Confiserie congelée selon les revendications 1 à 5, dans laquelle le tampon est présent en une quantité de 1 à 2,5 % en poids.

**7.** Confiserie congelée selon les revendications 1 à 6, comprenant 15 à 25 % en poids d'édulcorants.

**8.** Confiserie congelée selon les revendications 1 à 7, comprenant moins de 0,1 % en poids d'édulcorants artificiels.

**9.** Confiserie congelée selon les revendications 1 à 8, comprenant 2 à 12 % en poids de fructo-oligosaccharides.

**10.** Confiserie congelée selon les revendications 1 à 9, comprenant moins de 1 % en poids de protéine.

**11.** Confiserie congelée selon les revendications 1 à 10, comprenant moins de 1 % en poids de matières grasses.

**12.** Confiserie congelée selon les revendications 1 à 11, qui est une glace à l'eau, une glace aux fruits ou un sorbet.

**13.** Procédé de fabrication d'une confiserie congelée selon l'une quelconque des revendications 1 à 12, le procédé comprenant les étapes consistant à :

(a) préparer un mélange ayant un pH de 4,7 à 5,5 et comprenant 10 à 35 % en poids d'édulcorants ; 0,75 % à 3 % en poids d'un tampon, au plus 2 % en poids de protéine et au plus 2 % en poids de matières grasses ;
(b) pasteuriser et éventuellement homogénéiser le mélange ; puis
(c) congeler et éventuellement aérer le mélange pour produire la confiserie congelée.

## Fig.1a.

Mols NaOH

## Fig.1b.

Mass of sodium citrate / mass of remaining citric acid

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CA 2204467


**Non-patent literature cited in the description**

- **R. T. Marshall ; H. D. Goff ; R. W. Hartel.** Ice Cream. Kluwer Academic/Plenum Publishers, 2003